# EUROPEAN PATENT SPECIFICATION

(11) **EP 2 726 791 B1**
(45) Date of publication and mention of the grant of the patent: **01.04.2020**
(21) Application number: 12748772.6
(22) Date of filing: 28.06.2012
(51) Int. Cl.: F24C 7/08, G01K 1/02

(54) **WAVE STIRRING OVEN**
WELLENRÜHROFEN
FOUR À AGITATION D'ONDES

(30) Priority: 30.06.2011 FR 1102046
(43) Date of publication of application: 07.05.2014
(73) Proprietor: Thirode Grandes Cuisines Poligny 'TGCP', 39800 Poligny (FR)
(72) Inventor: BRUN, Jean-Marc, F-39230 Passenans (FR)
(74) Representative: HGF Limited
(86) International application number: PCT/IB2012/053266
(87) International publication number: WO 2013/001476

(56) References cited:
- EP-A1- 2 116 829
- EP-A1- 2 205 043
- DE-A1-102008 029 218
- DE-A1-102009 027 920
- US-A- 3 920 944
- US-A- 4 621 179
- US-A1- 2006 049 183
- US-A1- 2008 121 635

## Description

This invention relates to a cooking oven and more particularly a cooking oven comprising an antenna. This relates here to an oven for cooking food products.

A cooking oven is known, comprising walls delimiting a cooking cavity arranged for receiving food products to be cooked or to be heated, for instance arranged on cooking supports.

Moreover a known measurement probe allows for measuring the temperature of food products in the cooking cavity of an oven. Such a probe comprises an antenna and a piezoelectric substrate. When the piezoelectric substrate is submitted to a signal at a given frequency, the piezoelectric substrate transmits, via the antenna, an energizing value corresponding to the signal being received. In such a probe, the piezoelectric substrate resonates at a frequency being a function of the temperature it is submitted to. Thus, the piezoelectric substrate may be submitted to signals with different frequencies and, while determining the resonant frequency of the piezoelectric substrate to different signals, the temperature it is submitted to may be deducted.

Such a measurement probe may thus be used with the aim of measuring the temperature of food products arranged in the cooking cavity of the oven. An antenna may then be arranged inside the cooking cavity of the oven so as to energize the piezoelectric substrate.

Furthermore, from the application US 20080210685, a cooking oven is known, comprising walls delimiting a cooking cavity and on which an antenna is mounted. A wireless mobile measurement probe comprising a piezoelectric substrate is arranged in the centre of the cavity. The antenna allows, on the one hand, signals to be emitted to the measurement probe arranged in the cooking cavity, and, on the other hand, signals to be received from the measurement probe in response to the energization of a piezoelectric substrate of said probe. In such an oven, the antenna is mounted, in the cooking cavity, pressed against the wall of the oven. However, it has been observed that such an assembly creates stationary waves when the signals emitted by the antenna are reflected on a wall of the oven. A stationary wave is the phenomenon resulting from the simultaneous propagation in different directions of several waves with a similar frequency in the same physical medium, forming a representation in which some elements are fixed over the time. Instead of seeing a propagating wave, a stationary vibration is observed, but with a different intensity, et each point being observed. The typical fixed points are referred to as vibration nodes. Thus, when the nodes are located at the level of the piezoelectric substrate, they prevent it from being energized and disturb the operation of the probe, thereby not allowing any more the temperature of the elements to be heated to be measured. This is the problem the Applicant tried to overcome.

It has been found, furthermore, in the existing solutions of cooking oven comprising an antenna, that, when a measurement probe is arranged between cooking supports, the signals emitted by the antenna are reflected on the cooking supports, thereby preventing the piezoelectric substrate of the measurement probe to be energized as the latter only receives a weakened signal.

Finally, it has been found, in the existing solutions of cooking oven comprising an antenna, that such an antenna was not protected against shocks when the oven is being used.

Documents DE 102008029218 A1, DE 102009027920 A1 and EP2116829 A1 represent further state of the art relevant for the invention.

This invention aims at overcoming, at least partially, such drawbacks. To this end, it relates to a cooking oven comprising the features of claim 1, said oven being configured so as to prevent said signals from inducing stationary waves in the cavity of the oven.

The term «prevent» refers to the reduction of the number of stationary waves under a threshold allowing the good operation of a measurement probe that it to be used in the cavity of the oven. Otherwise stated, the oven is configured so as to prevent the stationary waves induced by the signals emitted by the antenna from disturbing the operation of a measurement probe arranged in the cavity of the oven, that is the oven is configured so as to prevent the level of stationary waves induced by the signals emitted by the antenna from allowing a measurement in the cavity.

In one embodiment, the oven further comprises at least one convection fan mounted on a wall of the oven and arranged for distributing the heat in the cooking cavity of said operating cooking oven, the antenna being arranged so that the fan stirs the signals emitted by the antenna in the cooking cavity.

A convection fan creates convection streams for distributing the heat in the cooking cavity of the operating oven. The fan may have the shape of a cylinder, for a centrifugation fan or a propeller for an axial fan, thereby mainly creating convection streams around the fan and a main axial stream in the axis of the fan.

Such a configuration thus allows the fan to stir the waves emitted by the antenna of the oven and therefore to further prevent nodes or stationary waves from being formed in the cavity.

Advantageously, stirring signals occurs through signals being reflected on the mobile parts of the operating fan.

The convection fan then acts as a reflection wave stirrer, for instance on the blades of the fan.

According to a feature of this invention, the oven further comprises at least one reflecting element configured so as to increase the wave stirring effect induced by the fan.

Such a reflecting element may, in particular, be mounted on a mobile part of the fan so as to increase the number of signal reflections in the cavity when the fan is operating. Such an element, arranged either on the fan, or on a wall of the oven, allows to increase the wave stirring effect of the convection fan obtained by the mere mobile elements of the operating fan (such as, for instance, the blades of the fan).

According to the invention, the oven comprises a first antenna and a second antenna, said first antenna and second antennas being configured so as to emit out-of-phase signals in the cavity of the oven so as to prevent said signals from inducing stationary waves in said cavity.

Such a configuration with two antennas and one phase shifter allows, with or without a convection fan, the node(s) being induced by stationary waves to be shifted so that the piezoelectric sensor of a temperature probe arranged in the cavity of the oven receives a maximum amplitude signal.

Advantageously, the first antenna is mounted substantially opposite the fan so that the signals are emitted by the antenna substantially in the direction of the fan. The fan can then fully fill its wave stirring function. Such a configuration allows the pales of the fan to axially and cyclically reflect the waves so as to fill the wave stirring function, thereby preventing stationary waves from being formed in the cavity.

According to another feature of this invention, the oven further comprises a door having one glazing, the antennas being mounted through screen printing on said glazing. This could occur, for instance, using a conductive ink or a conductive enamel. Screen printing mounting is economical and easy to achieve.

Such antennas could be linear, comb-shaped or zigzag-shaped. Such antenna shapes are easy to be manufactured and mounted on a wall of the oven and allow the signals emitted by the antenna to cover a large part of the cavity and to receive most of the signals emitted in the cavity.

The oven may also comprise a door having an internal glazing and an external glazing, the antennas being mounted on the internal glazing, the external glazing comprising a system configured so as to reflect the waves towards the cavity or to prevent waves to escape towards the exterior of the cavity. Such a system for reflecting waves towards the cavity, such as for instance a processing of the glazing, allows the waves to be retained in the cavity, allowing the antenna of the oven to receive more signals and/or less weakened signals. Such a shielding system, such as for instance a processing of the glazing, allows preventing waves from escaping towards the exterior of the cavity, which is less dangerous for the operator of the oven and prevents signals from being weakened through escaping towards the exterior.

Preferably, the antenna(s) extend(s) on the door of the oven so as to emit and receive signals throughout the height of the oven cavity. This allows the antenna to emit and receive signals throughout the height of the oven, including when metallic cooking plates are arranged at different levels in the cavity and the signals are weakened between said metallic plates.

Preferably, the antennas will have the shape of either a two quarter-wave strand dipole or a folded dipole. Several antennas may be used if the height of the oven allows this.

According to another feature of this invention, the antennas and the convection fan are mounted on the same wall, with the antennas being mounted perpendicular to the wall, and the length of the antenna being lower than or substantially equal to the height of the fan so that the antennas are protected from shocks induced by the cooking supports. Such shocks may be, for instance, induced by the cooking supports.

The fan may further comprise a protective element and the first antenna may be protected by said protective element. Thus, the antenna may be mounted behind a grid or a protective metal sheet of the convection fan. In such a case, the wire diameter of the grid as well as the spaces between the grid wires may be selected so as to let the waves travel or holes may be arranged in the protective metal sheet of the convection fan so as to let the waves travel.

According to another feature of this invention, the antennas extend in the cavity substantially perpendicular to a wall of the oven on a distance being higher than a quarter-wave of a continuous wall of the oven. This more particularly allows to more easily expose the antennas to wave stirring effects and to prevent edge effects with the right angles of the walls upon signals being emitted.

This invention further relates to a system comprising an oven such as defined hereinabove and a measurement probe, arranged in the cavity of the oven and able to receive signals emitted by the antenna of the oven.

Preferably, the measurement probe comprises a piezoelectric substrate configured for being energized by the signals so that a frequency peak corresponds to a given temperature.

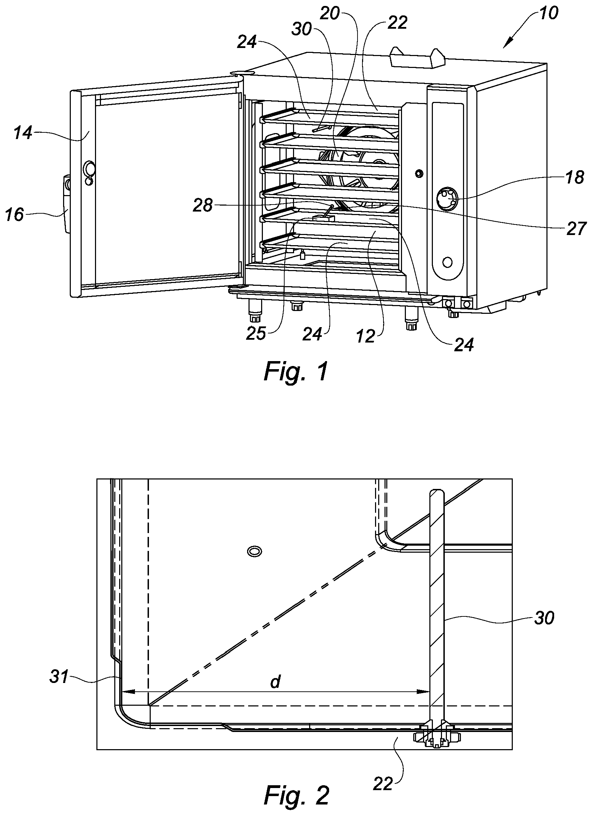

The features and the advantages of the present invention will become more evident from the following description of an embodiment of this invention, given as a non limitative example, with reference to the corresponding appended drawing (identical references relating to similar elements), wherein Figures 1, 2, 3a, 3b, 5, 6a and 6b illustrate only partial aspects or not covered aspects of the invention, with only one antenna comprised in the oven.
- Fig. 1 is perspective view of an exemplary cooking oven with a cooking cavity comprising cooking supports, having the door opened and comprising a stationary antenna and a mobile measurement probe being arranged in the cavity between the cooking supports,
- Fig. 2 is a partial view of a wall of the exemplary oven onto which an antenna is mounted,
- Fig. 3a is a partial perspective view of an exemplary cooking oven comprising a convection fan and one antenna,
- Fig. 3b is a partial perspective view of the oven of Fig. 3a further comprising cooking supports in its cavity,
- Fig. 4a is a partial perspective view of a cooking oven according to one embodiment of the invention, comprising a convection fan and two antennas,
- Fig. 4b illustrates a signal phase shifter used in the oven as illustrated on Fig. 4a,
- Fig. 5 is a perspective view of an exemplary cooking oven comprising a convection fan and one antenna mounted on the internal wall of the door of the oven,
- Fig. 6a is a perspective view of an exemplary cooking oven door on the internal wall of which one antenna is mounted,
- Fig. 6b is a perspective partial view of an exemplary cooking oven door on the internal wall of which one antenna and a retractable contact are mounted.

Fig. 1 shows an exemplary food product cooking oven 10, not comprising all the features of the invention, comprising walls delimiting a cooking cavity 12. The front side of the oven is a door 14 comprising a handle 16.

The oven 10 comprises means 18 for controlling the cooking and a convection fan 20, mounted on the rear internal wall 22 of the cavity 12, opposite the front side of the oven, for distributing the heat in the cooking cavity 12 of the operating oven 10. In order to improve the visibility, the protective element of the fan has not been shown on the Figs.

Cooking supports 24 having the shape of cooking plates are mounted in the cooking cavity 12 of the oven 10.

A food product 25 is positioned on one of the cooking plates 24 and a temperature measuring probe 27 is arranged in the food product 25 so as to measure the temperature upon the cooking.

The measurement probe 27 comprises a signal emission and reception antenna 28. The measurement probe 27 may comprise a piezoelectric substrate (not shown) that may be energized by signals, for instance electromagnetic, at a frequency depending on the temperature. Such a type of probe uses, for instance, the known «Surface Acoustic Waves» technology (SAW).

The measurement probe 27 communicates with an antenna 30 mounted inside the cooking cavity 12 on the rear wall 22 of the oven, opposite the front side of the oven, substantially perpendicular to the rear wall 22, in the vicinity of the convection fan 20.

The antenna of the oven 30 allows signals to be sent at different frequencies to the measurement probe 27 sending, in response via its antenna 28, signals corresponding to the energization of the piezoelectric substrate to the antenna of the oven 30.

Amongst the frequencies of the signals received by the antenna of the oven 30, a frequency may correspond to the resonance of the piezoelectric substrate. Such a resonance frequency depends on the temperature that may thereby be determined by comparison with a known reference such as for instance a standard temperature curve of the piezoelectric substrate.

The emission of signals by the antenna of the oven 30 as well as the processing of the signals received by the antenna of the oven 30 occurs via a measurement control module (not shown) operationally coupled to the oven.

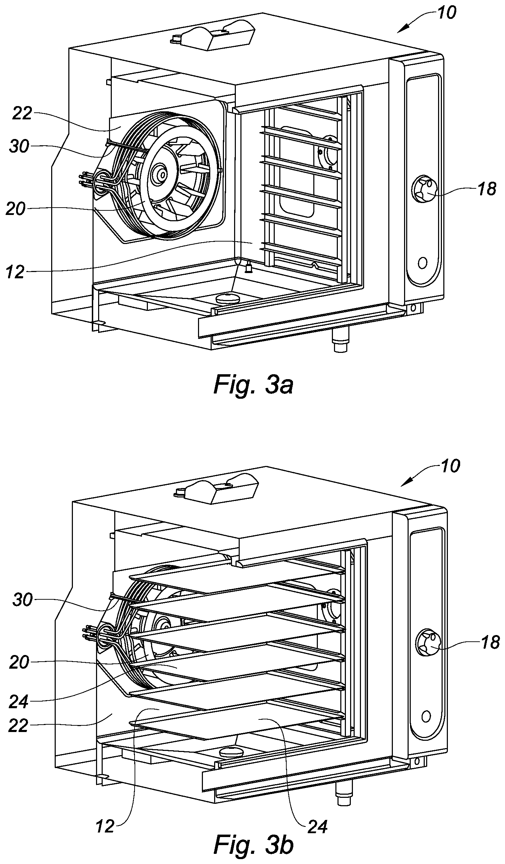

As illustrated on the exemplary Figs. 2, 3a and 3b, the antenna 30 extends, inside the cavity, substantially perpendicular to the internal rear wall 22 of the oven 10.

The antenna 30 preferably extends on a distance d preferably being higher than one quarter of a signal wavelength, either emitted or received by the antenna 30, of a continuous and perpendicular wall 31, of the oven 10, as illustrated on Fig. 2.

The convection fan 20 is used as a stirrer for the waves emitted and received by the antenna of the oven, allowing to fight against the effects of the signal nodes induced by the stationary waves in the cooking cavity 12 of the oven 10.

Thus, as shown on the exemplary Fig. 3a, the antenna 30 is configured so that the convection fan 20 of the oven 10 stirs the waves emitted or received by the antenna of the oven 30 in the cavity 12 being mounted in the cavity 12 on the internal rear wall 22 of the oven 10 parallel to the central axis of the convection fan 20.

The antenna 30 is also configured so as to be protected against potential shocks being induced in the oven 10, for instance by the cooking supports 24 or the food products 25.

Thus, as illustrated on the exemplary Fig. 3a, the length of the antenna 30 is lower than the height, according to the central axis, of the cylindrical convection fan 20 extending in the cooking cavity 12, allowing a protective grid or a protective metal sheet of the fan 20 to protect the antenna 30 as well.

The cooking supports 24 and the food products 25 may thereby come in abutment against the convection fan 2, without damaging the antenna 30, as illustrated on Fig. 3b.

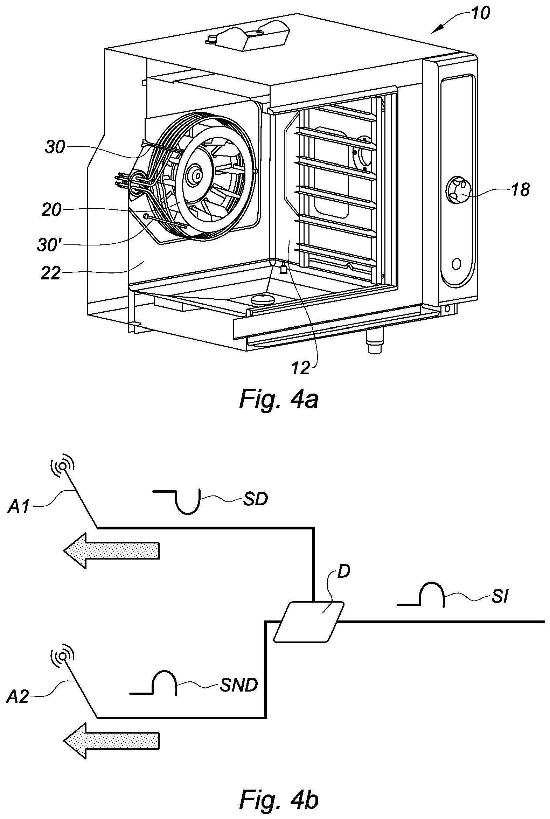

Fig. 4a shows an oven 10 according to the invention, comprising a second antenna 30'. Such a configuration is used with a signal wave displacer D.

Such a signal phase shifter, the operation of which is shown on Fig. 4b, allows to lag an initial signal SI so that the out-of-phase signal SD is emitted by one of the two antennas A1 or A2 of the oven 30 or 30' and the non out-of-phase signal SND is emitted by the other antenna, respectively A2 or A1, of the oven, respectively, 30' or 30.

An algorithm allowing a frequency scanning of the cavity of the oven, so as to determine a resonant peak for a probe arranged in the cavity of the oven, as previously described, may further allow to determine the optimum necessary outphasing between the two signals so as to shift the stationary wave node(s) so that the piezoelectric temperature sensor receives a maximum amplitude signal. Such an algorithm may be implemented, for instance, each time the oven is used so as to optimize its operation.

Such a configuration with two antennas and one phase shifter is used so as to prevent the signals from inducing stationary waves in the cavity of the oven even in the absence of a convection fan.

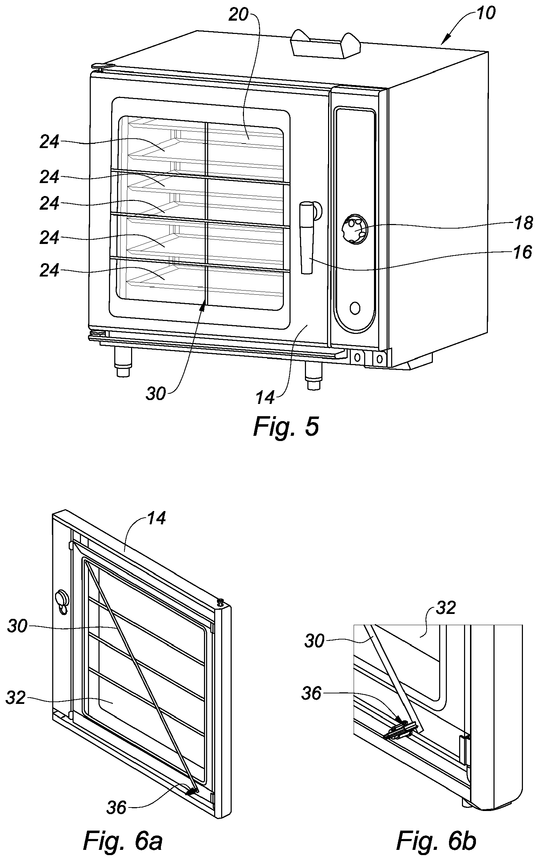

Fig. 5 illustrates an exemplary cooking oven the closed door of which comprises an antenna 30 mounted on the internal wall 32 of the glass door 14 of the oven 10, opposite the convection fan 20.

The antenna 30 is mounted vertical on the internal wall 32 of the door 14 of the oven 10 so that it is opposite the convection fan 20 that can thus stir the waves emitted and received by the operating antenna 30 with the door 14 of the oven 10 being closed.

The antenna 30 may also be mounted obliquely, for instance, substantially diagonally, on the internal wall 32 of the door 14 of the oven 10, as illustrated on Fig. 6a.

A retractable contact 36, illustrated on Fig. 6b, may allow, when the door 14 of the oven 10 is closed, to connect the antenna 30 to the measurement control module, for instance via a connector and a wire.

When the door 14 is opened, the retractable contact 36 does not come into electric contact with the measurement control module and the antenna 30 can then not operate, preventing more specifically waves to be emitted outside the oven 10.

## Claims

1. A cooking oven (10) comprising walls delimiting a cooking cavity (12) arranged to receive food products to be cooked (25), a first antenna (30) mounted on a wall of the oven (22), in said cooking cavity (12), said first antenna (30) being configured to emit signals in the cooking cavity (12) and to energize a temperature measurement probe (27) intended to be arranged in the food products so as to measure its temperature upon cooking, such an oven (10) being **characterized in that**
said oven further comprises a second antenna (30') and a phase shifter (D), said second antenna (30') being configured to emit signals in the cooking cavity (12) and to energize said temperature measurement probe (27), said first antenna (30) and second antenna (30') being configured for emitting out-of-phase signals in the cavity (12) of the oven (10) so as to prevent said signals from inducing stationary waves in said cavity (12) by shifting vibration node(s) of signal stationary waves so that a piezoelectric sensor of said temperature measurement probe arranged in the cavity of the oven receives a maximum amplitude signal, so that said oven is configured so as to prevent said signals from inducing such stationary waves in the cavity (12) of the oven (10).

2. The oven according to claim 1, said oven (10) further comprising at least one convection fan (20) mounted on a wall of the oven and arranged for distributing the heat in the cooking cavity (12) of said operating cooking oven (10), the antenna (30) being arranged so as that the fan (20) stirs the signals emitted by the antenna (30) in the cooking cavity (12).

3. The oven according to claim 2, wherein stirring signals occurs through signals reflecting on the mobile parts of the operating fan (20).

4. The oven according to any of claims 1 and 3, said oven (10) further comprising at least one reflecting element configured so as to increase the wave stirring effect induced by the fan (20).

5. The oven according to any of preceding claims, said oven (10) further comprising a door (14) with a glazing, said at least one antenna (30, 30') being mounted through screen printing on said glazing.

6. The oven according to any of preceding claims, said oven (10) further comprising a door (14) with an internal glazing and an external glazing, the antenna (30, 30') being mounted on the internal glazing, the external glazing comprising a system configured so as either to reflect the waves towards the cavity (12) or to prevent the waves from escaping outside the cavity (12).

7. The oven according to any of claims 1 to 6, wherein the antenna (30, 30') and the convection fan (20) are mounted on the same wall (22), the antenna (30, 30') being mounted perpendicular to the wall (22), and the length of the antenna (30, 30') is lower than or substantially equal to the height of the fan (20) so that the antenna (30, 30') is protected against shocks induced by the cooking supports (24).

8. The oven according to any of claims 1 to 6 and 11, wherein the antenna (30, 30') extends in the cavity (12) substantially perpendicular to a wall (22) of the oven (10) at a higher distance than a quarter wave of a continuous wall (31) of the oven (10).

## Patentansprüche

1. Garofen (10), umfassend Wände, die einen Garraum (12) begrenzen, der angeordnet ist, zu garende Lebensmittelerzeugnisse (25) aufzunehmen, eine erste Antenne (30), die an einer Wand des Ofens (22) in dem Garraum (12) angebracht ist, wobei die erste Antenne (30) konfiguriert ist, Signale in dem Garraum (12) zu emittieren und eine Temperaturmesssonde (27) zu aktivieren, die in den Lebensmittelerzeugnissen angeordnet werden soll, um deren Temperatur beim Garen zu messen, wobei der Ofen (10) **dadurch gekennzeichnet ist, dass**
der Ofen ferner eine zweite Antenne (30') und einen Phasenschieber (D) umfasst, die zweite Antenne (30') konfiguriert ist, Signale in dem Garraum (12) zu emittieren und die Temperaturmesssonde (27) zu aktivieren, die erste Antenne (30) und die zweite Antenne (30') konfiguriert sind, phasenverschobene Signale in dem Raum (12) des Ofens (10) zu emittieren, um zu verhindern, dass diese Signale stehende Wellen in dem Raum (12) durch Verschieben von (einem) Schwingungsknoten der stehenden Signalwellen induzieren, sodass ein piezoelektrischer Sensor der Temperaturmesssonde, die in dem Ofenraum angeordnet ist, ein Signal mit einer maximalen Amplitude empfängt, sodass der Ofen konfiguriert ist zu verhindern, dass diese Signale derartige stehende Wellen in dem Raum (12) des Ofens (10) induzieren.

2. Ofen nach Anspruch 1, wobei der Ofen (10) ferner mindestens ein Konvektionsgebläse (20) umfasst, das an einer Wand des Ofens angebracht ist und angeordnet ist zum Verteilen der Wärme in dem Garraum (12) des betriebenen Garofens (10), wobei die Antenne (30) derart angeordnet ist, dass das Gebläse (20) die von der Antenne (30) in dem Garraum (12) emittierten Signale rührt.

3. Ofen nach Anspruch 2, wobei Rühren der Signale vorgenommen wird, indem Signale an den beweglichen Teilen des betriebenen Gebläses (20) reflektiert werden.

4. Ofen nach einem der Ansprüche 1 und 3, wobei der Ofen (10) ferner mindestens ein reflektierendes Element umfasst, das konfiguriert ist, die von dem Gebläse (20) induzierte Wellenrührwirkung zu erhöhen.

5. Ofen nach einem der vorhergehenden Ansprüche, wobei der Ofen (10) ferner eine Tür (14) mit einer Verglasung umfasst, wobei die mindestens eine Antenne (30, 30') durch ein Siebdruckverfahren auf der Verglasung angebracht ist.

6. Ofen nach einem der vorhergehenden Ansprüche, wobei der Ofen (10) ferner eine Tür (14) mit einer innenliegenden Verglasung und einer außenliegenden Verglasung umfasst, die Antenne (30, 30') auf der innenliegenden Verglasung angebracht ist, die außenliegende Verglasung ein System umfasst, das konfiguriert ist, entweder die Wellen in Richtung auf den Raum (12) zu reflektieren oder zu verhindern, dass die Wellen aus dem Raum (12) austreten.

7. Ofen nach einem der Ansprüche 1 bis 6, wobei die Antenne (30, 30') und das Konvektionsgebläse (20) an der gleichen Wand (22) angebracht sind, die Antenne (30, 30') senkrecht zu der Wand (22) angebracht ist und die Länge der Antenne (30, 30') kleiner als oder im Wesentlichen gleich der Höhe des Gebläses (20) ist, sodass die Antenne (30, 30') gegen Erschütterungen gesichert ist, die von den Garguthaltern (24) induziert werden.

8. Ofen nach einem der Ansprüche 1 bis 6 und 11, wobei sich die Antenne (30, 30') in dem Raum (12) im Wesentlichen senkrecht zu einer Wand (22) des Ofens (10) in einem größeren Abstand als eine Viertelwelle von einer durchgehenden Wand (31) des Ofens (10) erstreckt.

## Revendications

1. Four de cuisson (10) comprenant des parois délimitant une cavité de cuisson (12) agencée pour recevoir des produits alimentaires destinés à être cuits (25), une première antenne (30) montée sur une paroi du four (22), dans ladite cavité de cuisson (12), ladite première antenne (30) étant configurée pour émettre des signaux dans la cavité de cuisson (12) et pour mettre sous tension une sonde de mesure de température (27) prévue pour être agencée dans les produits alimentaires afin de mesurer sa température lors de la cuisson, ce four (10) étant **caractérisé en ce que**
ledit four comprend en outre une seconde antenne (30') et un déphaseur (D), ladite seconde antenne (30') étant configurée pour émettre des signaux dans la cavité de cuisson (12) et pour mettre sous tension ladite sonde de mesure de température (27), lesdites première antenne (30) et seconde antenne (30') étant configurées pour émettre des signaux déphasés dans la cavité (12) du four (10) afin d'empêcher lesdits signaux d'induire des ondes stationnaires dans ladite cavité (12) en décalant un ou des nœud(s) de vibration d'ondes stationnaires de signal pour qu'un capteur piézoélectrique de ladite sonde de mesure de température agencé dans la cavité du four reçoive un signal d'amplitude maximum, pour que ledit four soit configuré afin d'empêcher lesdits signaux d'induire de telles ondes stationnaires dans la cavité (12) du four (10).

2. Four selon la revendication 1, ledit four (10) comprenant en outre au moins un ventilateur à convection (20) monté sur une paroi du four et agencé pour distribuer la chaleur dans la cavité de cuisson (12) dudit four de cuisson en fonctionnement (10), l'antenne (30) étant agencée de telle sorte que le ventilateur (20) répartisse les signaux émis par l'antenne (30) dans la cavité de cuisson (12).

3. Four selon la revendication 2, dans lequel la répartition de signaux se produit par l'intermédiaire du fait que des signaux se réfléchissent sur les parties mobile du ventilateur en fonctionnement (20).

4. Four selon l'une quelconque des revendications 1 et 3, ledit four (10) comprenant en outre au moins un élément réfléchissant configuré afin d'augmenter l'effet de répartition d'ondes induit par le ventilateur (20).

5. Four selon l'une quelconque des revendications précédentes, ledit four (10) comprenant en outre une porte (14) avec un vitrage, ladite au moins une antenne (30, 30') étant montée par l'intermédiaire de sérigraphie sur ledit vitrage.

6. Four selon l'une quelconque des revendications précédentes, ledit four (10) comprenant en outre une porte (14) avec un vitrage interne et un vitrage externe, l'antenne (30, 30') étant montée sur le vitrage interne, le vitrage externe comprenant un système configuré afin de réfléchir les ondes vers la cavité (12) ou d'empêcher les ondes de sortir à l'extérieur de la cavité (12).

7. Four selon l'une quelconque des revendications 1 à 6, dans lequel l'antenne (30, 30') et le ventilateur à convection (20) sont montés sur la même paroi (22), l'antenne (30, 30') étant montée perpendiculairement à la paroi (22), et la longueur de l'antenne (30, 30') est inférieure ou sensiblement égale à la hauteur du ventilateur (20) pour que l'antenne (30, 30') soit protégée contre des chocs induits par les supports de cuisson (24).

8. Four selon l'une quelconque des revendications 1 à 6 et 11, dans lequel l'antenne (30, 30') s'étend dans la cavité (12) sensiblement perpendiculairement à une paroi (22) du four (10) à une distance plus élevée qu'un quart d'onde d'une paroi continue (31) du four (10).
